(19)

Europäisches
Patentamt

European
Patent Office

Office européen
des brevets

(11) **EP 4 353 393 A1**

(12) **EUROPEAN PATENT APPLICATION**
published in accordance with Art. 153(4) EPC

(43) Date of publication:
**17.04.2024  Bulletin 2024/16**

(21) Application number: **22858244.1**

(22) Date of filing: **21.07.2022**

(51) International Patent Classification (IPC):
*B23K 11/11* (2006.01)        *B23K 11/16* (2006.01)
*B23K 11/24* (2006.01)        *C22C 38/00* (2006.01)
*C22C 38/04* (2006.01)        *C22C 38/58* (2006.01)

(52) Cooperative Patent Classification (CPC):
**B23K 11/11; B23K 11/16; B23K 11/24;
C22C 38/00; C22C 38/04; C22C 38/58**

(86) International application number:
**PCT/JP2022/028412**

(87) International publication number:
**WO 2023/021922 (23.02.2023 Gazette 2023/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.08.2021  JP 2021134058**

(71) Applicant: **JFE Steel Corporation
Tokyo 100-0011 (JP)**

(72) Inventors:
• **ENDO, Reiko
Tokyo 100-0011 (JP)**
• **TAKASHIMA, Katsutoshi
Tokyo 100-0011 (JP)**
• **MATSUDA, Hiroshi
Tokyo 100-0011 (JP)**

(74) Representative: **Haseltine Lake Kempner LLP
Bürkleinstrasse 10
80538 München (DE)**

(54) **RESISTANCE SPOT WELDING JOINT AND RESISTANCE SPOT WELDING METHOD THEREFOR**

(57)      It is an object to provide a resistance spot welded joint and a resistance spot welding method therefor. The present invention is a resistance spot welded joint formed by resistance-spot-welding two or more steel sheets including at least one high strength steel sheet. The high strength steel sheet has a chemical composition containing, in mass %, C: 0.05 to 0.6%, Si: 0.1 to 2.0%, Mn: 1.5 to 4.0%, and P: 0.10% or less, with the balance being Fe and incidental impurities. The hardness of a softest nugget region is 90% or less of the hardness of the heat-affected zone. The softest nugget region has a microstructure including tempered martensite. The average number density of carbide particles having a diameter of 100 nm or more in the softest nugget region is 10 or more per 5 $\mu m^2$ in a cross section of the steel sheets.

FIG. 1

**Description**

Technical Field

The present invention relates to a resistance spot welded joint and a resistance spot welding method therefor.

Background Art

In recent years, various high strength steel sheets (high tensile strength steel sheets) are being increasingly used for automobile bodies, from the viewpoint of achieving a weight reduction to thereby improve fuel efficiency and from the viewpoint of achieving crash safety. In automobile assembly lines, resistance spot welding is mainly used to join components.

The joint strength of a resistance spot weld joined by resistance spot welding is evaluated using tensile shear strength (TSS) that is the tensile strength of the joint in a shear direction and cross tension strength (CTS) that is the tensile strength in a peeling direction. The TSS of a resistance spot weld tends to increase as the tensile strength of the base material increases. However, in some cases, the CTS decreases when the tensile strength of the base material is 780 MPa or more. As the CTS of a resistance spot weld (weld) decreases, the mode of failure of the weld changes from plug failure in which ductile fracture occurs in the heat-affected zone (HAZ) or the base material around the resistance spot weld to partial plug failure or interface failure in which brittle fracture occurs in the nugget. The cause of the reduction in the CTS may be, for example, brittle fracture that occurs due to hardening of an edge portion of the nugget by quenching. To solve the above problem, various studies have been conducted on a secondary energization method in which energization is performed again after primary energization.

Examples of the technique for solving the above problem include techniques in Patent Literature 1 to Patent Literature 3. In a weld disclosed in Patent Literature 1, an edge portion of the nugget is tempered. Specifically, Patent Literature 1 discloses that the microstructure of an outer layer zone of the nugget is a dendritic microstructure whose average arm spacing is 12 um or less, that the average diameter of carbide particles contained in the microstructure is 5 nm to 100 nm, and that the number density of the carbide particles is $2 \times 10^6$ particles/mm$^2$ or more.

Patent Literature 2 discloses that a melted and solidified portion (nugget) in a joint portion and the heat-affected zone that are formed when resistance welding steel sheets having a specific chemical composition are resistance-welded have a microstructure including tempered martensite or tempered bainite as a main phase.

Patent Literature 3 discloses a resistance spot welded joint in which the hardness outside the nugget and the microstructure inside the nugget are specified. The conditions for the resistance spot weld in this resistance spot welded joint are that the microstructure of the nugget is an equiaxed martensite microstructure and that a soft region whose hardness is lower than the hardness of the base material is present outside the nugget.

Citation List

Patent Literature

PTL 1: Japanese Patent No. 5043236
PTL 2: Japanese Patent No. 5182855
PTL 3: Japanese Patent No. 5895430

Summary of Invention

Technical Problem

In Patent Literature 1, the microstructure of the outer layer zone of the nugget is a dendritic microstructure whose average arm spacing is 12 um or less. However, this average arm spacing is not the indicator indicating the degree of tempering. Moreover, in Patent Literature 1, the average diameter of the carbide particles contained in the microstructure is specified to be 5 nm to 100 nm. Since the average diameter of the carbide particles is small, the degree of tempering is small.

However, in the present invention described later, the hardness is lowest in an edge portion of the nugget. In this manner, stress concentration in the edge portion of the nugget is avoided, and the edge portion of the nugget is locally tempered, so that the toughness of the edge portion of the nugget is improved. Specifically, in the present invention, the edge portion of the nugget is locally strongly tempered. Therefore, judging from the average diameter of carbide particles described later, it is obvious that the degree of tempering differs from that in Patent Literature 1.

When the technique of Patent Literature 2 is applied to welding using steel sheets (high strength steel sheets) having the chemical composition of the invention described later, it is necessary that, after the formation of a nugget, the step of tempering the nugget such that the martensite microstructure in the edge portion of the nugget is changed to tempered martensite be performed. Specifically, the technical idea of the invention differs from that of Patent Literature 2.

In Patent Literature 3, only the hardness of the portion outside the nugget and the microstructure inside the nugget are specified, and no consideration is given to controlling the hardness inside the nugget.

Problems with a spot welding method in which steel sheets having a tensile strength of 780 MPa or more, particularly high strength steel sheets having a tensile strength of 780 MPa or more and containing C in an amount of 0.05 to 0.6% by mass, are welded using only single energization are the reduction in CTS as described above and the occurrence of delayed fracture.

The present invention has been made in view of the foregoing problems, and it is an object to provide a resistance spot welded joint having improved joint strength and including a resistance spot weld formed by resistance-spot-welding a plurality of steel sheets including at least one high strength steel sheet and to provide a resistance spot welding method therefor.

Solution to Problem

In the present invention, to solve the foregoing problems, extensive studies have been conducted on a mechanism of the reduction in cross tension strength (CTS) in resistance spot welding using a sheet set including at least one high strength steel sheet and on a method for improving the cross tension strength (CTS).

As described above, as the strength of steel sheets increases, the CTS decreases. When the CTS is low, the failure mode changes from plug failure in which ductile fracture occurs in the heat-affected zone (HAZ) or the base material around the resistance spot weld to interface failure or partial plug failure in which brittle fracture occurs in the nugget. It is therefore difficult to ensure sufficient CTS in the high strength steel sheets.

The causes of the interface failure are cracking in the edge portion of the nugget due to (a) embrittlement of the edge portion of the nugget due to a hard microstructure formed by rapid cooling after the formation of the nugget, (b) stress concentration in the edge portion of the nugget due to hardening, and (c) a reduction in toughness in the edge portion of the nugget. To prevent the brittle fracture, it is necessary that the edge portion of the nugget have a microstructure having sufficient toughness and that the stress concentration in the edge portion of the nugget be reduced.

Accordingly, in the present invention, additional studies have been conducted in order to improve the CTS of the resistance spot weld using the high strength steel sheets described above, and the following findings have been obtained.

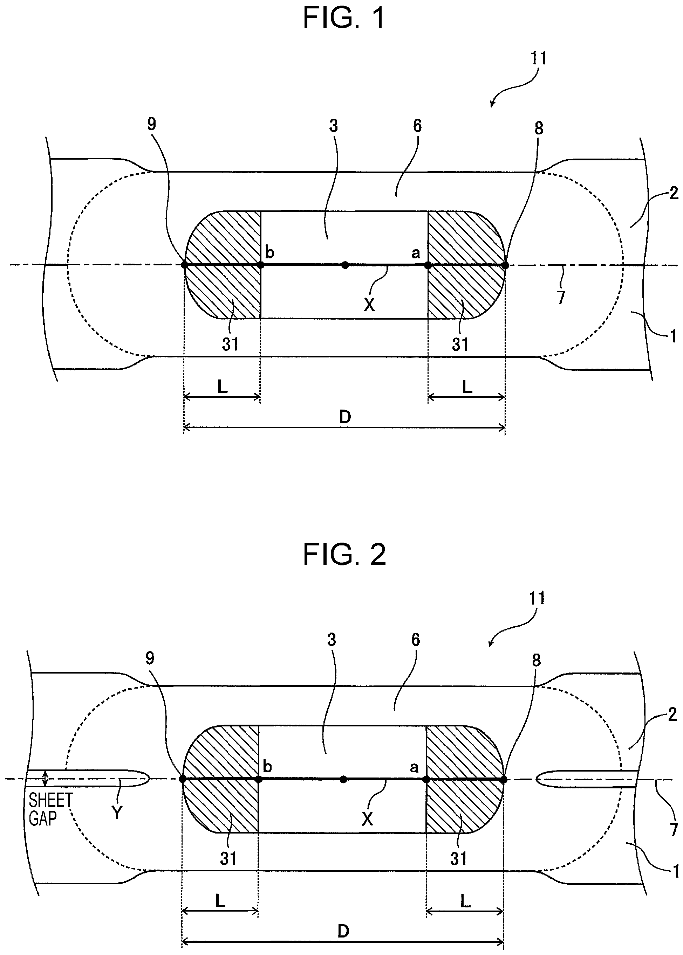

To improve the CTS, the hardness (Vickers hardness) of a prescribed region in the edge portion of the nugget (regions indicated by "L" in Fig. 1 etc. described later) is reduced so as to be smallest in a region excluding the base material, specifically in a region that includes the heat-affected zone and the inside of the nugget excluding the prescribed region in the edge portion of the nugget. In this manner, the toughness of the edge portion of the nugget is improved. The "heat-affected zone" is a region in which its hardness varies continuously relative to the hardness of the base material.

When the edge portion of the nugget has sufficient toughness, stress concentration in the edge portion of the nugget when a crack propagates from the HAZ into the edge portion of the nugget is relieved. In this case, even when a crack propagates into the HAZ or slightly into the edge portion of the nugget, the crack is unlikely to propagate into the inside of the nugget because of the high toughness of the edge portion of the nugget. Therefore, the fracture mode can be plug failure or partial plug failure in which fracture slightly occurs inside the nugget. It has been found that, when the plug remains present, the CTS is improved.

The present invention is based on the above findings and summarized as follows.

[1] A resistance spot welded joint having a resistance spot weld formed by resistance-spot-welding two or more steel sheets including at least one high strength steel sheet,

wherein the high strength steel sheet has a chemical composition containing, in mass %,
C: 0.05 to 0.6%,
Si :0.1 to 2.0%,
Mn: 1.5 to 4.0%, and
P: 0.10% or less,
with the balance being Fe and incidental impurities,
wherein the length of a line segment X connecting a first edge portion and a second edge portion is denoted as D (mm) where the first edge portion and the second edge portion are two points at which a boundary of a nugget intersects a faying surface of two of the two or more steel sheets, wherein positions on the line segment X that are spaced toward a center of the nugget from the first edge portion and the second edge portion are denoted as a point a and a point b, respectively,

wherein a region inside the nugget in which a distance L (mm) between the first edge portion and the point a and a distance L (mm) between the second edge portion and the point b satisfy a relation with the length D (mm) of the line segment X that is represented by formula (1) is defined as a softest nugget region,

wherein the hardness of the softest nugget region on at least the faying surface is equal to or less than 90% of the hardness of a heat-affected zone formed so as to surround the nugget,

wherein the softest nugget region has a microstructure including tempered martensite, and

wherein the average number density of carbide particles having a diameter of 100 nm or more in the softest nugget region is 10 or more per 5 $\mu$m$^2$ in a cross section of the steel sheets,

$$0 < L \leq 0.10 \times D \quad (1)$$

provided that, when a gap is present between the two of the two or more steel sheets at the faying surface, the first edge portion and the second edge portion are two points at which the boundary of the nugget intersects a straight line Y that is located midway in the gap and that is parallel to the faying surface.

[2] The resistance spot welded joint according to [1], wherein the chemical composition of the high strength steel sheet further contains, in mass %, one or two or more selected from

Cu: 0.8% or less,
Ni: 1.0% or less,
Mo: 1.0% or less,
Cr: 1.0% or less,
Nb: 0.080% or less,
V: 0.50% or less,
Ti: 0.20% or less,
B: 0.005% or less,
Al: 2.0% or less, and
Ca: 0.005% or less.

[3] The resistance spot welded joint according to [1] or [2], wherein the high strength steel sheet includes a coated layer on a surface thereof.

[4] A resistance spot welding method for the resistance spot welded joint according to any one of [1] to [3], the resistance spot weld being formed by holding, between a pair of welding electrodes, a sheet set including the two or more steel sheets overlapping each other and including the at least one high strength steel sheet and then performing energization under application of pressure,

wherein the energization includes:

a primary energization step of energizing the sheet set at a current value of $I_m$ (kA) to form the nugget; and
a post-tempering heat treatment step including
a cooling process of providing a cooling time $t_c$ (ms) shown in formula (2),
a heating process of energizing the resistance spot weld at a current value $I_t$ (kA) shown in (3) for an energization time tt (ms) shown in formula (4), and
a holding process of energizing the resistance spot weld at a current value $I_{tm}$ (kA) shown in formula (5) for an energization time $t_{tm}$ (ms) shown in formula (6),

$$800 \leq t_c, \quad (2)$$

$$1.1 \times I_m \leq I_t \leq 2.0 \times I_m, \quad (3)$$

$$100 < t_t \leq 200, \quad (4)$$

$$I_{tm} < I_t, \quad (5)$$

$$300 \leq t_{tm} < 3500. \quad (6)$$

Advantageous Effects of Invention

According to the present invention, the toughness of the edge portion of the nugget of the resistance spot weld in the resistance spot welded joint formed by welding the plurality of steel sheets including the high strength steel sheet can be improved. Thus, the joint strength of the resistance spot welded joint can be improved, so that industrially significant effects can be obtained.

Brief Description of Drawings

[Fig. 1] Fig. 1 is a cross-sectional view schematically showing the vicinity of a resistance spot weld of a resistance spot welded joint according to an embodiment of the invention.
[Fig. 2] Fig. 2 is a cross-sectional view schematically showing the vicinity of a resistance spot weld of a resistance spot welded joint according to another embodiment of the invention.
[Fig. 3] Fig. 3 is a cross-sectional view schematically showing the vicinity of a resistance spot weld of a resistance spot welded joint according to another embodiment of the invention.
[Fig. 4] Fig. 4 is a cross-sectional view illustrating an example of the resistance spot welding method of the invention.
[Fig. 5] Fig. 5 is a schematic drawing illustrating a method for measuring the hardness of an edge portion of a nugget in the invention.
[Fig. 6] Fig. 6 is a schematic drawing illustrating a method for measuring the average number density of carbide particles in an edge portion of a nugget in the invention.
[Fig. 7] Fig. 7 is a graph illustrating an example of an energization pattern in the resistance spot welding method of the invention.

Description of Embodiments

The present invention will next be described. However, the present invention is not limited to the following embodiments.

[Resistance spot welded joint]

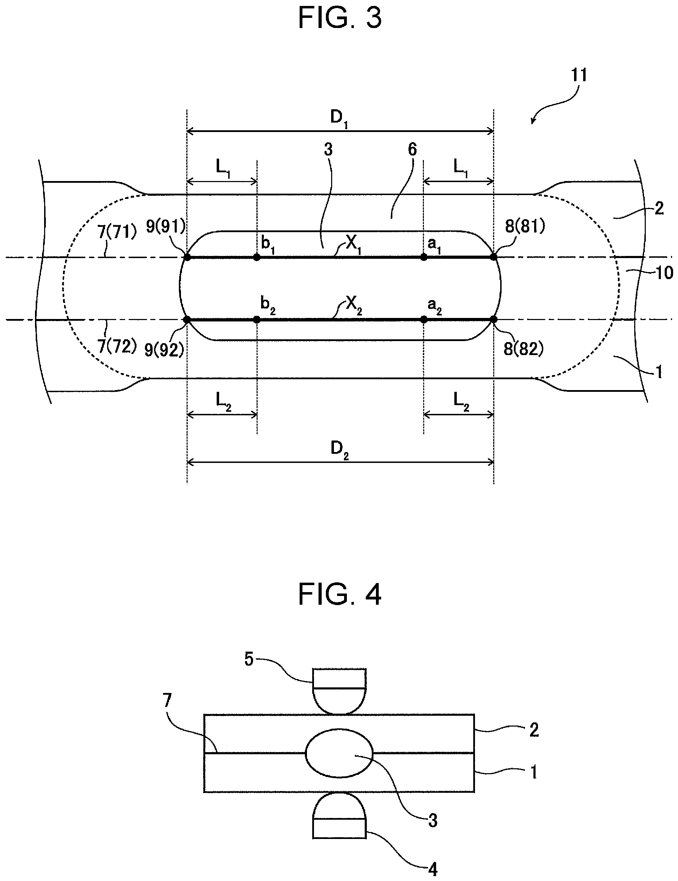

Referring first to Figs. 1 to 3, the resistance spot welded joint of the invention will be described. Figs. 1 to 3 show cross-sectional views illustrating examples of a resistance spot weld in the resistance spot welded joint of the invention and the vicinity thereof, the cross-sectional views being taken in the thickness direction. In Fig. 1, the number of overlapping steel sheets is two. In Fig. 2, the number of overlapping steel sheets is two, and a sheet gap is present between the steel sheets. In Fig. 3, the number of overlapping steel sheets is three.

The present invention is a resistance spot welded joint having a resistance spot weld formed by resistance-spot-welding a plurality of overlapping steel sheets. The overlapping steel sheets include at least one high strength steel sheet described later. No particular limitation is imposed on the number of steel sheets described above, and it is only necessary that the number of steel sheets be two or more. The upper limit of the number of steel sheets is not particularly specified, but the number of steel sheets is preferably 4 or less.

Fig. 1 shows a resistance spot welded joint 11 formed by welding two overlapping steel sheets, and a high strength steel sheet is used for a steel sheet 1 disposed on the lower side and/or a steel sheet 2 disposed on the upper side. In the example shown in Fig. 1, the high strength steel sheet is used for the upper steel sheet 2. The high strength steel sheet may have a coated layer as described later. However, in Fig. 1, the illustration of the coated layer on the surface of the steel sheet is omitted. A resistance spot weld described below is formed on a steel sheet faying surface (faying surface) 7 of the steel sheets 1 and 2.

[Resistance spot weld]

The resistance spot weld in the resistance spot welded joint 11 of the invention will be described in detail. As shown in Fig. 1, the resistance spot weld (hereinafter referred to as the "weld") of the resistance spot welded joint 11 includes a nugget 3 and a heat-affected zone (HAZ) 6 formed so as to surround the nugget 3. The nugget 3 is a melted portion formed into a circular (elliptical) shape when the weld is viewed from the upper surface side of the steel sheets. In the present invention, the microstructure and characteristics of an edge region of the nugget 3 are specified below.

Figs. 1 to 3 show cross sections passing through the centers of nuggets 3 that are the centers when the welds are viewed from the upper surface side of the steel sheets, the cross-sectional views being taken in the thickness direction.

As shown in Fig. 1, two points at which the boundary of the nugget 3 intersects the faying surface 7 of the steel sheets 1 and 2 are defined as a first edge portion 8 and a second edge portion 9. The length of a line segment X connecting the first edge portion 8 to the second edge portion 9 is denoted as D (mm). Positions on the line segment X spaced toward the center of the nugget 3 from the first edge portion 8 and the second edge portion 9 are denoted as a point a and a point b, respectively, and the distance between the first edge portion 8 and the point a and the distance between the second edge portion 9 and the point b are each denoted as L (mm). In the present invention, a region inside the nugget 3 in which the distances L satisfy the relation with the length D of the line segment X that is represented by formula (1) (the regions diagonally shaded in Fig. 1) is defined as a "softest nugget region 31."

$$0 < L \leq 0.10 \times D \qquad (1)$$

Here, D in formula (1) is the length of the line segment X.

The hardness (Vickers hardness) of the softest nugget region 31 on at least the faying surface 7 is equal to or less than 90% of the hardness of the HAZ 6, and the softest nugget region 31 has a microstructure including tempered martensite. In addition, the average number density of carbide particles having a diameter of 100 nm or more in the softest nugget region 31 is 10 or more per 5 $\mu m^2$ in a cross section of the steel sheets.

The softest nugget region 31 has a lower hardness than a region in the nugget 3 excluding the softest nugget region 31 and is therefore a lowest hardness softened region.

When three or more steel sheets 1, 2, and 10 are disposed so as to overlap each other as shown in Fig. 3, softest nugget regions 31 (not shown in Fig. 3) are present for respective faying surfaces 71 and 72. When a gap (sheet gap) is present between the steel sheets 1 and 2 at the faying surface 7 as shown in Fig. 2, two points at which the boundary of the nugget 3 intersects a straight line Y located midway in the gap and parallel to the faying surface 7 are defined as the first edge portion 8 and the second edge portion 9.

In the example shown in Fig. 3, when a softest nugget region (not shown) for the faying surface 71 and/or a softest nugget region (not shown) for the faying surface 72 has the microstructure and characteristics described below, the effects of the invention can be obtained.

[Hardness of softest nugget region 31: equal to or less than 90% of hardness of HAZ 6]

First, hardnesses in the invention will be described.

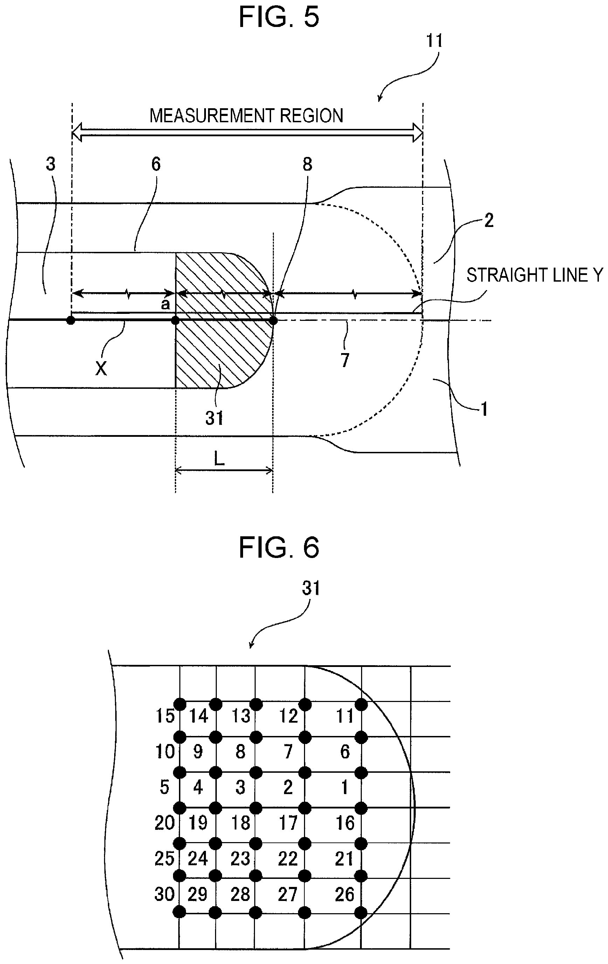

The "hardness of the softest nugget region 31" described above is the Vickers hardness of the softest nugget region 31 measured according to JIS Z 2244 (2020). Specifically, the hardness is measured using a measurement method described later in Examples at positions arranged at 0.2 mm intervals on a straight line (a straight line Y shown in Fig. 5) that is parallel to the faying surface 7 of the steel sheets and that is located 0.2 mm above the faying surface 7 in the thickness direction. The measurement region extends from the center of the nugget to the outer edge of the HAZ 6. The smallest hardness value (the lowest hardness value) in the softest nugget region 31 within the measurement region is used as the "hardness of the softest nugget region 31" (see Fig. 5).

The "hardness of the HAZ 6" described above is the average of the Vickers hardness values measured in the HAZ 6 according to JIS Z 2244 (2020). Specifically, the hardness is measured using the measurement method described later in Examples at positions arranged at 0.2 mm intervals on the straight line (the straight line Y shown in Fig. 5) that is parallel to the faying surface 7 of the steel sheets and that is located 0.2 mm above the faying surface 7 in the thickness direction. The measurement region extends from the center of the nugget to the outer edge of the HAZ 6. The average of the hardness values in the region from the boundary between the HAZ 6 and the nugget 3 to the outer edge of the HAZ 6 within the measurement region is used as the "hardness of the HAZ 6" (see Fig. 5).

In the example shown in Fig. 1, the "hardness of the region in the nugget 3 excluding the softest nugget region 31" described above is the hardness in the nugget 3 excluding the diagonally shaded region (the softest nugget region 31) in Fig. 1. This hardness can also be measured using the same method as above according to JIS Z 2244 (2020). Specifically, the measurement is performed at positions arranged at 0.2 mm intervals on the straight line (the straight line Y shown in Fig. 5) that is parallel to the faying surface 7 of the steel sheets and that is located 0.2 mm above the faying surface 7 in the thickness direction. The measurement region extends from the center of the nugget to the outer edge of the HAZ 6.

The average of the hardness values in a region from the center of the nugget 3 to the point a shown in Fig. 1 (the edge of the softest nugget region 31 on the nugget center side) within the measurement region is determined, and this value is used as the "hardness of the region in the nugget 3 excluding the softest nugget region 31" (see Fig. 5).

When the hardness of the softest nugget region 31 exceeds 90% of the hardness of the HAZ 6, the nugget is hardened martensite. In this case, the toughness in the vicinity of the edge portion of the nugget is low, and therefore the CTS cannot be improved. Therefore, the hardness of the softest nugget region 31 is equal to or lower than 90% of the hardness of the HAZ 6. The hardness of the softest nugget region 31 is preferably 87% or less, more preferably 85% or less, and still more preferably 80% or less.

The lower limit of the hardness of the softest nugget region 31 is not particularly specified. Even when the softest nugget region 31 is the most tempered region and the entire microstructure of the region 31 is tempered martensite, the target hardness can be obtained. Therefore, the hardness of the softest nugget region 31 is preferably equal to or more than 55%, more preferably equal to or more than 60%, and still more preferably equal to or more than 70% of the hardness of the HAZ 6.

As described above, the softest nugget region 31 is the lowest hardness region whose hardness is lower than the hardness of the region in the nugget 3 excluding the softest nugget region 31. In this case, the toughness of the edge portion of the nugget is improved, and facture occurs such that the propagation path of a crack under a CTS load passes through the edge portion of the nugget. Therefore, the failure mode is plug failure or partial plug failure in which 70% or more of the fracture occurs in the plug portion, so that the CTS is improved. The hardness of the softest nugget region 31 is preferably equal to or more than 55%, more preferably equal to or more than 60%, still more preferably equal to or more than 70%, and yet more preferably equal to or more than 75% of the hardness of the region in the nugget 3 excluding the softest nugget region 31. The hardness ratio is preferably 90% or less and more preferably 85% or less.

In the present invention, the hardness of the softest nugget region 31, the hardness of the nugget 3, and the hardness of the HAZ 6 can be measured using the method described later in Examples.

In the example shown in Fig. 5, the high strength steel sheet is used for the steel sheet 2. In this case, the measurement is performed at "positions 0.2 mm above the faying surface of the steel sheets" as described above. Specifically, for example, when the high strength steel sheet is used for the lower steel sheet 1, the measurement is performed at "positions 0.2 mm below the faying surface."

[Microstructure of softest nugget region 31]

To allow the hardness of the softest nugget region 31 to satisfy the hardness ratio described above, it is necessary to control the microstructure of the region 31 such that the microstructure includes a tempered martensite microstructure. In this case, the toughness of the edge portion of the nugget can be improved, and the stress concentration in the edge portion of the nugget can be relieved. From the viewpoint of obtaining this operational effect, the area fraction of the tempered martensite in the softest nugget region 31 is 50% or more with respect to the entire softest nugget region 31. The area fraction is more preferably 55% or more, still more preferably 60% or more, and yet more preferably 65% or more. The upper limit of the area fraction of the tempered martensite in the softest nugget region 31 is not particularly specified. This is because, even when the area fraction of the tempered martensite in the microstructure of the softest nugget region 31 is 100%, the effect of improving the toughness and the effect of relieving the stress concentration in the edge portion of the nugget can be expected as described above. The area fraction of the tempered martensite in the softest nugget region 31 is preferably 100% or less, more preferably 98% or less, and still more preferably 95% or less.

The remaining microstructure in the softest nugget region 31 other than the tempered martensite includes martensite and/or ferrite. However, if the area fraction of the microstructure (remaining microstructure) other than the tempered martensite is large, it is difficult to achieve the effect of improving the toughness of the edge portion of the nugget and the effect of relieving the stress concentration. For this reason, the total area fraction of the remaining microstructure is preferably 50% or less, more preferably 45% or less, still more preferably 40% or less, and yet more preferably 30% or less.

In the present invention, the microstructure of the softest nugget region 31 can be measured using a method described later in Examples.

[Carbide in softest nugget region 31]

In the softest nugget region 31, the average number density of carbide particles having a diameter of 100 nm or more per 5 $\mu m^2$ in a cross section of the sheets is 10 or more.

The reason that the diameter of the carbide particles is set to 100 nm or more is to check the formation of coarse carbide particles that are formed when tempering proceeds sufficiently. However, as the diameter of the carbide particles increases, precipitates other than carbide may be formed during tempering. Therefore, the diameter of the carbide particles is preferably 500 nm or less.

If the average number density of carbide particles having the diameters described above is less than 10 in a viewing field of a 5 um square in a cross section of the sheets within the softest nugget region 31, the tempering is insufficient. In this case, the toughness of the edge portion of the nugget is low, and cracks under a CTS load are likely to propagate into the nugget. Therefore, the average number density is 10 or more per 5 $\mu m^2$ in the cross section of the steel sheets. The average number density is more preferably 15 or more per 5 $\mu m^2$ in the cross section of the steel sheets, still more preferably 30 or more per 5 $\mu m^2$ in the cross section of the steel sheets, and yet more preferably 50 or more per 5 $\mu m^2$ in the cross section of the steel sheets. The upper limit of the average number density is not specified. However, in consideration of the diameter of the carbide particles, the average number density is preferably 450 or less per 5 $\mu m^2$ in the cross section of the steel sheets, more preferably 400 or less per 5 $\mu m^2$ in the cross section of the steel sheets, still more preferably 250 or less per 5 $\mu m^2$ in the cross section of the steel sheets, and yet more preferably 150 or less per 5 $\mu m^2$ in the cross section of the steel sheets,

As described later in Examples using Fig. 6, the softest nugget region 31 is finely divided into rectangular blocks, and observation is started from a position labeled "1" in Fig. 6. The observation is continued while the observation position is changed until the observation result meets the average number density described above. In the present invention, when the average number density of the carbide particles is satisfied in at least one 5 um square viewing field in the softest nugget region 31, the operational effects described above can be obtained.

In the present invention, the diameter of the carbide particles and their average number density can be measured using methods described later in Examples.

[High strength steel sheet]

The reasons for the limitations on the chemical composition of the base material in the high strength steel sheet in the resistance spot welded joint of the invention will be described. In the following description, "%" in the chemical composition represents "% by mass" unless otherwise specified.

C: 0.05 to 0.6%

C is an element contributing to strengthening of the steel. If the content of C is less than 0.05%, the strength of the steel is low, and it is very difficult to produce a steel sheet having a tensile strength of 780 MPa or more.

If the content of C exceeds 0.6%, although the strength of the steel sheet is high, the amount of hard martensite is excessively large, and the number of micro-voids increases. Moreover, the nugget and the HAZ therearound are excessively hardened and also embrittled, and it is difficult to improve the CTS. Therefore, the content of C is 0.05 to 0.6%. The content of C is more preferably 0.10% or more. The content of C is more preferably 0.50% or less and still more preferably 0.45% or less.

Si: 0.1 to 2.0%

When the content of Si is 0.1% or more, Si acts effectively to strengthen the steel. Si is a ferrite-forming element and advantageously facilitates the formation of ferrite in the edge portion of the nugget. However, if the content of Si exceeds 2.0%, although the steel is strengthened, the toughness may be adversely affected. Therefore, the content of Si is 0.1 to 2.0%. The content of Si is more preferably 0.2% or more and still more preferably 1.8% or less.

Mn: 1.5 to 4.0%

If the content of Mn is less than 1.5%, high joint strength can be obtained even when a long cooling period used in the present invention is not applied. If the content of Mn exceeds 4.0%, the weld is embrittled, or significant cracking due to the embrittlement occurs, and it is therefore difficult to improve the joint strength. Therefore, the content of Mn is 1.5 to 4.0%. The content of Mn is more preferably 2.0% or more. The content of Mn is more preferably 3.7% or less, still more preferably 3.5% or less, yet more preferably 3.2% or less, and even more preferably 2.9% or less.

P: 0.10% or less

P is an incidental impurity. If the content of P exceeds 0.10%, strong segregation occurs at the edge of the nugget of the weld, and it is therefore difficult to improve the joint strength. Therefore, the content of P is 0.10% or less. The content of P is preferably 0.05% or less and more preferably 0.02% or less. No particular limitation is imposed on the lower limit of the content of P. However, an excessive reduction in the content of P leads to an increase in cost. Therefore, the content of P is preferably 0.005% or more.

The high strength steel sheet used in the present invention contains the elements described above with the balance being Fe and incidental impurities.

In the present invention, the chemical composition described above is the basic chemical composition of the high strength steel sheet. In the present invention, the chemical composition may further contain one or two or more optional elements selected from Al, B, Ca, Cr, Cu, Ni, Mo, Ti, V, and Nb. The following elements Al, B, Ca, Cr, Cu, Ni, Mo, Ti, V, and Nb are optionally added, and the contents of these components may be 0%.

Al: 2.0% or less

Al is an element that can control the microstructure in order to obtain fine austenite grains. If the amount of Al added is excessively large, the toughness deteriorates. Therefore, when Al is contained, the content of Al is preferably 2.0% or less. The content of Al is more preferably 0.10% or less, still more preferably 0.08% or less, and yet more preferably 0.07% or less. The content of Al is more preferably 0.005% or more and still more preferably 0.010% or more.

B: 0.005% or less

B is an element that can improve the hardenability of the steel to thereby strengthen the steel. Therefore, when B is contained, the content of B is preferably 0.0005% or more. The content of B is more preferably 0.0007% or more. Even if a large amount of B is added, the above effect is saturated. Therefore, when B is contained, the content of B is 0.005% or less. The content of B is more preferably 0.0010% or less.

Ca: 0.005% or less

Ca is an element that can contribute to an improvement in the workability of the steel. However, if a large amount of Ca is added, the toughness deteriorates. Therefore, when Ca is contained, the content of Ca is 0.005% or less. The content of Ca is more preferably 0.004% or less. The content of Ca is preferably 0.001% or more.

Cr: 1.0% or less

Cr is an element that can improve the hardenability to thereby improve the strength. However, if the content of Cr is excessively large, i.e., more than 1.0%, the toughness of the HAZ may deteriorate. Therefore, when Cr is contained, the content of Cr is 1.0% or less. The content of Cr is more preferably 0.8% or less. The content of Cr is preferably 0.01% or more.

Cu: 0.8% or less, Ni: 1.0% or less, and Mo: 1.0% or less

Cu, Ni, and Mo are elements that can contribute to an improvement in the strength of the steel. However, if large amounts of Cu, Ni, and Mo are added, the toughness deteriorates. Therefore, when these elements are contained, the content of Cu is 0.8% or less, and the content of Ni is 1.0% or less. Moreover, the content of Mo is 1.0% or less. The content of Cu is more preferably 0.6% or less. The content of Cu is preferably 0.005% or more and more preferably 0.006% or more. The content of Ni is more preferably 0.8% or less. The content of Ni is preferably 0.01% or more. The content of Mo is more preferably 0.8% or less. The content of Mo is preferably 0.005% or more and more preferably 0.006% or more.

Ti: 0.20% or less

Ti is an element that can improve the hardenability of the steel to thereby strengthen the steel. However, if a large amount of Ti is added, carbide is formed, and the precipitation hardening causes the toughness to deteriorate significantly. Therefore, when Ti is contained, the content of Ti is 0.20% or less. The content of Ti is more preferably 0.15% or less. The content of Ti is preferably 0.003% or more and more preferably 0.004% or more.

V: 0.50% or less

V is an element that can control the microstructure through precipitation hardening to thereby strengthen the steel. However, a large amount of V contained leads to deterioration of the toughness of the HAZ. Therefore, when V is contained, the content of V is preferably 0.50% or less. The content of V is more preferably 0.3% or less. The content of V is preferably 0.005% or more and more preferably 0.02% or more.

Nb: 0.080% or less

Nb forms fine carbonitride to thereby improve the cross tension strength and delayed fracture resistance after resistance welding. To obtain this effect, the content of Nb must be 0.005% or more. However, if a large amount of Nb is added, not only does the elongation decrease, but also the toughness deteriorates significantly. Therefore, when Nb is contained, the content of Nb is 0.080% or less. The content of Nb is more preferably 0.070% or less and still more preferably 0.060% or less. The content of Nb is preferably 0.005% or more and more preferably 0.006% or more.

S, N, and O are inevitably added during the production process. When the contents of S, N, and O are within the following ranges, the effects of the invention are not impaired, and their presence is acceptable.

S: 0.005% or less

S is an element that segregates at grain boundaries to embrittle the steel. S is an incidentally contained element. S forms sulfides and thereby reduces the local deformability of the steel sheet. Therefore, the content of S is preferably 0.005% or less. The content of S is more preferably 0.004% or less and still more preferably 0.003% or less. No particular limitation is imposed on the lower limit of the content of S. However, an excessive reduction in the content of S leads to an increase in cost. Therefore, the content of S is preferably 0.001% or more.

N: 0.010% or less

N is an element that causes deterioration in the aging resistance of the steel. N is an incidentally contained element. Therefore, when N is contained, the content of N is preferably 0.010% or less. The content of N is more preferably 0.008% or less. The content of N is preferably 0.001% or more.

O: 0.03% or less

O (oxygen) is an element that forms non-metallic inclusions to cause deterioration in the cleanliness and toughness of the steel. Therefore, when O is contained, the content of O is preferably 0.03% or less. The content of O is more preferably 0.02% or less. The content of O is preferably 0.005% or more.

Preferably, the high strength steel sheet having the above-described chemical composition has a tensile strength of 780 MPa or more. The tensile strength of the high strength steel sheet is more preferably 1180 MPa or more. As described above, when, in particular, the tensile strength of the base material is 780 MPa or more, the CTS may decrease. According to the present invention, even when the tensile strength of the high strength steel sheet is 780 MPa or more, since the hardness of the edge portion of the nugget is lowest in the weld, the vicinity of the edge portion of the nugget has a microstructure with high toughness. Therefore, brittle fracture of the edge portion of the nugget can be prevented. This can prevent a reduction in the CTS of the weld. Of course, with a high strength steel sheet having a tensile strength or less than 780 MPa, the above effects can be obtained.

[Type of coating on high strength steel sheet]

The high strength steel sheet in the invention may be subjected to galvanizing treatment to form a steel sheet having a galvanized layer on the surface thereof (a galvanized steel sheet). Even in this case, the above effects can be obtained. The galvanized layer is a coated layer containing zinc as a main component. Examples of the coated layer containing zinc as a main component include a hot-dip galvanized layer, an electrogalvanized layer, a Zn-Al coated layer, and a Zn-Ni layer. The high strength steel sheet in the invention may be a galvannealed steel sheet formed by subjecting the steel sheet to the galvanizing treatment and then to galvannealing treatment to thereby form a galvannealed layer on the surface of the base material.

In the present invention, the overlapping steel sheets may be a plurality of overlapping steel sheets of the same type or a plurality of overlapping steel sheets of different types. A steel sheet having a galvanized layer on the surface thereof (a galvanized steel sheet) and a steel sheet having no galvanized layer on the surface thereof (a cold rolled steel sheet) may be disposed so as to overlap each other. The thicknesses of the steel sheets may be the same or different, and no problem arises in either case. From the viewpoint of applying the steel sheets to general automobile steel sheets, the thicknesses of the steel sheets are, for example, preferably 0.4 mm to 2.2 mm.

[Resistance spot welding method]

Next, an embodiment of a resistance spot welding method for producing the resistance spot welded joint of the invention including the weld described above will be described.

The resistance spot welded joint of the invention can be produced by resistance spot welding in which a sheet set including two or more overlapping steel sheets including at least one high strength steel sheet described above is held between a pair of welding electrodes and joined together by energizing the sheet set under the application of pressure.

For example, as shown in Fig. 4, two steel sheets 1 and 2 are disposed so as to overlap each other to thereby form a sheet set. Next, the sheet set is held between a pair of welding electrodes 4 and 5 disposed on the lower and upper sides of the sheet set, and energization is performed under the application of pressure while the welding conditions are controlled to prescribed conditions. In this manner, the steel sheets are joined together at their interface that later becomes the faying surface 7 of the steel sheets, and the weld described above can thereby be formed (see Fig. 1). When a high strength cold rolled steel sheet and a high strength galvanized steel sheet are disposed so as to overlap each other to thereby form a sheet set, the steel sheets are disposed so as to overlap each other such that the surface of the high strength galvanized steel sheet that includes the galvanized layer faces the high strength cold rolled steel sheet.

In the present invention, the step of energizing the overlapping steel sheets 1 and 2 held between the welding electrodes 4 and 5 includes a primary energization step and a post-tempering heat treatment step. These steps in the invention will be described in detail.

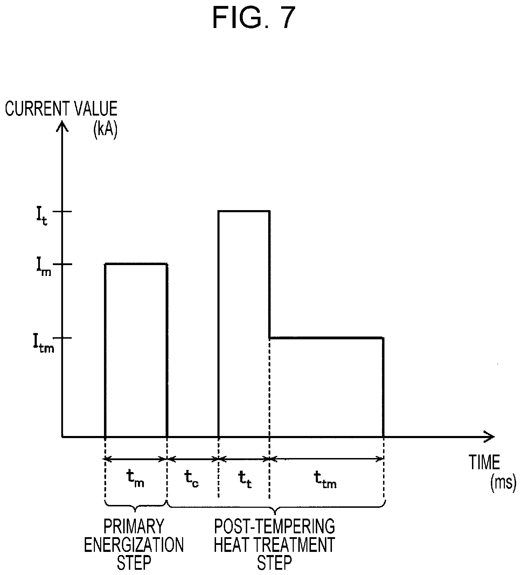

Fig. 7 shows an example of an energization pattern in the invention. As shown in the example in Fig. 7, the primary energization step is performed, and then the post-tempering heat treatment step is performed, in which a cooling process, a heating process, and a holding process are performed in this order.

<Primary energization step>

The primary energization step is the step of forming a nugget 3 having the required size by melting the faying surface 7 of the steel sheets 1 and 2 (see Fig. 4). In the primary energization step, the energization is performed at a current value $I_m$ (kA) to form the nugget.

Generally, the diameter (mm) of nuggets used for resistance spot welds (welds) of automotive steel sheets is $3.0\sqrt{t}$ to $6.0\sqrt{t}$ (t (mm): sheet thickness). In the present invention, the above numerical range is referred to as the "target nugget diameter." In the primary energization step in the invention, no particular limitation is imposed on the energization conditions and pressurizing conditions for forming the nugget 3, so long as the nugget 3 obtained has the target nugget diameter. "t" in "t (mm): sheet thickness" is the sheet thickness of the steel sheet having the smallest thickness among the steel sheets used in the sheet set.

From the viewpoint of using the high strength steel sheet in the invention in the overlapping steel sheets and stably forming a nugget 3 having the target nugget diameter on the faying surface of the steel sheets, it is preferable that the energizing conditions and pressurizing conditions in the primary energization step are controlled as follows.

The current value $I_m$ (kA) in the primary energization step is preferably 3.0 kA to 8.0 kA. If the current value $I_m$ is excessively small, the target nugget diameter cannot be obtained stably. If the current value $I_m$ is excessively large, the nugget diameter may be excessively large, or the degree of melting of the steel sheets may be large. In this case, the molten weld splashes out of the sheet gap, so that the nugget diameter may decrease. Because of the above reasons, the current value $I_m$ is 3.0 kA to 8.0 kA. The current value $I_m$ is more preferably 3.5 kA or more and still more preferably 4.0 kA or more. The current value $I_m$ is more preferably 7.5 kA or less and still more preferably 7.0 kA or less.

The energization time $t_m$ (ms) in the primary energization step is preferably 120 ms to 400 ms. Like the current value $I_m$, the energization time $t_m$ is the time required to stably form a nugget 3 having the target nugget diameter. If the energization time $t_m$ is shorter than 120 ms, it is feared that the nugget may be unlikely to form. If the energization time $t_m$ exceeds 400 ms, it is feared that the diameter of the nugget formed may be larger than the target nugget diameter and that the workability may deteriorate. The energization time $t_m$ is preferably 200 ms or longer. The energization time is preferably 350 ms or shorter. However, so long as the required nugget diameter is obtained, the energization time $t_m$ may be shorter or longer than the above numerical range.

As for the pressurizing conditions in the primary energization step, the welding force is preferably 2.0 kN to 7.0 kN. If the welding force is excessively large, the energization diameter increases, and it is therefore difficult to ensure the nugget diameter. If the welding force is excessively small, the energization diameter is small, and splashes are easily generated. Because of the above reasons, the welding force is 2.0 kN to 7.0 kN. The welding force is more preferably 3.0 kN or more and is more preferably 6.5 kN or less. In some cases, the welding force is limited by the ability of the device used. The welding force may be set to be lower than or higher than the above numerical range, so long as the required nugget diameter can be obtained using the welding force.

<Post-tempering heat treatment step>

The post-tempering heat treatment step is the step for post-heat treatment in which the edge portion of the nugget 3 formed in the primary energization step is tempered to improve the toughness. Specifically, in this step, the tempering is effectively performed such that the edge portion of the nugget is tempered to change its microstructure to tempered martensite and that the edge portion of the nugget (i.e., the softest nugget region 31) becomes the softest portion having the smallest hardness. In the post-tempering heat treatment step, the weld is subjected to the cooling process, the heating process, and the holding process in this order after the primary energization step. To obtain the effect of improving the toughness of the edge portion of the nugget, it is important that the welding conditions in the above processes in the post-tempering heat treatment step be controlled as follows.

[Cooling process]

First, after the primary energization step, cooling is performed to a temperature at which the edge portion of the nugget undergoes martensitic transformation (the cooling process). In the cooling process, to obtain the effect of tempering described later sufficiently, a non-energization state is maintained for a cooling time $t_c$ (ms) shown in formula (2) to cool the weld.

$$800 \leq t_c \qquad (2)$$

If the cooling time $t_c$ (ms) in the cooling process is shorter than 800 ms, the martensitic transformation does not occur sufficiently, and martensite is not formed. In the microstructure in this case, austenite remains present. Therefore, even when the subsequent processes (the heating process and the holding process) are performed, the austenite remains present, and finally a martensite microstructure is formed. In this case, the edge portion of the nugget has an embrittled microstructure, and the CTS is not improved. Therefore, the cooling time $t_c$ (ms) is 800 ms or longer. The cooling time $t_c$ is preferably 850 ms or longer, more preferably 900 ms or longer, and still more preferably 1000 ms or longer.
No particular limitation is imposed on the upper limit of the cooling time $t_c$ (ms) in the cooling process. Since the steel sheets used in the invention are steel sheets for automobiles, a long welding time causes a reduction in working efficiency. Therefore, the cooling time $t_c$ (ms) is preferably 2200 (ms) or shorter and more preferably 2000 (ms) or shorter.

[Heating process]

Subsequent to the cooling process, the heating process is performed. In the heating process, energization (secondary energization) in which heating is performed in an appropriate temperature range is performed in order to temper the martensite microstructure formed by the cooling in the previous process. The "appropriate temperature range" is a tempering temperature range in which the edge portion of the nugget (specifically, the softest nugget region 31 shown in Fig. 1 etc.) is changed to a softest portion having the smallest hardness.
Specifically, in the heating process, the weld is energized at a current value $I_t$ (kA) shown in formula (3) for an energization time tt (ms) shown in formula (4).

$$1.1 \times I_m \leq I_t \leq 2.0 \times I_m \qquad (3)$$

$$100 < t_t \leq 200 \qquad (4)$$

Generally, even when the energization is performed with the current value during the energization (secondary energization) after the primary energization step set to be constant, the temperature of the edge portion of the nugget increases as the energization time in the secondary energization increases. Therefore, the tempering in the target temperature range is temporary.
Accordingly, in the present invention, it is particularly important to increase a current for the initial energization after the primary energization step (i.e., the energization in the heating process) to thereby increase the temperature of the edge portion of the nugget to the above-described appropriate temperature, i.e., a temperature equal to or higher than the $Ac_1$ point, rapidly in a short time. In this manner, the microstructure of the edge portion of the nugget is changed to tempered martensite, and the tempering can be performed effectively. If the current value $I_t$ in this process is excessively small, the effect of tempering becomes low. If the current value $I_t$ in this process is excessively large, the temperature exceeds the $Ac_3$ point, so that the microstructure of the edge portion of the nugget cannot be changed to tempered martensite.
If the energization time tt in this process is excessively long, it is highly possible that the temperature exceeds the $Ac_3$ point. Moreover, splashes occur, and it is highly possible that the specified nugget diameter is not obtained. In addition, the workability deteriorates. Therefore, it is necessary to specify the appropriate energization time tt.
Because of the above reasons, the current value $I_t$ (kA) in the heating process satisfies the relation $1.1 \times I_m \leq$

$I_t \leq 2.0 \times I_m$. If the current value $I_t$ in the heating process is less than $(1.1 \times I_m)$ (kA), the temperature is lower than the $Ac_1$ point, so that the edge portion of the nugget cannot be tempered effectively. The current value $I_t$ is preferably $(1.12 \times I_m)$ (kA) or more and more preferably $(1.14 \times I_m)$ (kA) or more.

If the current value $I_t$ in the heating process exceeds $(2.0 \times I_m)$ (kA), it is highly possible that the temperature exceeds the $Ac_3$ point. In this case, austenite transformation again occurs in the subsequent process, and the microstructure finally becomes martensite, so that embrittlement occurs. Therefore, the toughness of the edge portion of the nugget is not obtained. The current value $I_t$ is preferably $(1.7 \times I_m)$ (kA) or less and more preferably $(1.5 \times I_m)$ (kA) or less. In the heating process, the heating to a temperature equal to or higher than the $Ac_1$ point and equal to or lower than the $Ac_3$ point is performed. In the holding process, tempering is facilitated to generate carbide particles, and the average number density of the carbide particles is increased. It is therefore important that the temperature in the heating process be increased to a temperature at which the tempering can be facilitated.

As described above, in the heating process, since the temperature is rapidly increased in a short time, the energization time tt (ms) in the heating process is $100 < tt \leq 200$. The energization time tt is preferably 120 ms or longer and more preferably 140 ms or longer. The energization time tt is preferably 180 ms or shorter and more preferably 160 ms or shorter.

[Holding process]

Subsequent to the heating process, the holding process is performed. As a result of the heating in the heating process, the microstructure of the edge portion of the nugget has been changed to tempered martensite. However, when only the heating process is performed, austenite remains in part of the edge portion because the tempering time is short. Therefore, the holding process is provided to perform energization (secondary energization). In this manner, the edge portion of the nugget is sufficiently tempered, and the austenite is transformed to tempered martensite.

Specifically, in the holding process, the weld is energized at a current value $I_{tm}$ (kA) shown in formula (5) for an energization time $t_{tm}$ (ms) shown in formula (6).

$$I_{tm} < I_t \qquad (5)$$

$$300 \leq t_{tm} < 3500 \qquad (6)$$

From the viewpoint of controlling the temperature appropriately in order to temper the edge portion of the nugget more effectively, the current value $I_{tm}$ (kA) in the holding process must be lower than the current value $I_t$ (kA) in the heating process. If the current value $I_{tm}$ in the holding process is equal to or higher that the current value $I_t$ (kA) in the heating process, the temperature of the edge portion of the nugget may again become a temperature equal to or higher than the $Ac_1$ point. In this case, the microstructure of the edge portion of the nugget is martensite, and it is feared that the toughness of the edge portion of the nugget may be low. The current value $I_{tm}$ is preferably equal to or less than $(0.90 \times I_t)$ (kA), more preferably equal to or less than $(0.85 \times I_t)$ (kA), and still more preferably equal to or less than $(0.80 \times I_t)$ (kA).

No particular limitation is imposed on the lower limit of the current value $I_{tm}$ (kA) in the holding process. To increase the average number of carbide particles, it is necessary to use an appropriate current value for maintaining the temperature in the heating process. If the current value is excessively low or excessively high, the average number cannot be increased. From the viewpoint of further facilitating tempering in the holding process, the current value $I_{tm}$ (kA) is preferably equal to or more than $(0.10 \times I_t)$ (kA), more preferably equal to or more than $(0.35 \times I_t)$ (kA), still more preferably equal to or more than $(0.40 \times I_t)$ (kA), and yet more preferably equal to or more than $(0.50 \times I_t)$ (kA).

The energization time $t_{tm}$ (ms) in the holding process is 300 ms or longer and shorter than 3500 ms. In the heating process, a high current value is necessary in order to increase the temperature. The holding process is the step of tempering the edge portion of the nugget, and the energization time $t_{tm}$ may be long. However, from the viewpoint of the working efficiency, the energization time $t_{tm}$ is shorter than 3500 ms. The energization time $t_{tm}$ is more preferably 2000 ms.

To temper the edge portion of the nugget sufficiently, it is necessary to temper the edge portion of the nugget at a temperature equal to or lower than the $Ac_1$ point. If the energization time is short, the martensite is not sufficiently tempered, is transformed to austenite in the holding process, and finally becomes martensite. Because of the above reason, the energization time $t_{tm}$ is 300 ms or longer. The energization time $t_{tm}$ is preferably 350 ms or longer and more preferably 400 ms or longer.

As described above, in the resistance spot welding method of the invention, by appropriately controlling the welding conditions in the post-tempering heat treatment step, the edge portion of the nugget can have the microstructure described above, and the toughness of the edge portion of the nugget is improved. Specifically, in the welded joint obtained by this welding method, a ductile fracture surface is obtained to thereby prevent interface failure, and the failure mode can be plug failure or partial plug failure with a most part of the plug remaining. In this case, the joint strength (CTS) of the obtained welded joint can be improved. Therefore, even when a sheet set including a steel sheet having a steel sheet chemical composition containing a relatively large amount of C, i.e., the above-described high strength steel sheet having a tensile strength of 780 MPa or more and containing C in an amount of 0.05 to 0.6% by mass, is welded, the joint strength (CTS) can be further improved.

EXAMPLES

The operations and effects of the present invention will be described by way of Examples. However, the present invention is not limited to the following Examples.
Steel sheets (steel sheets A to K) shown in Tables 1 and 2 and having a tensile strength of 780 MPa to 1470 MPa and a thickness of 0.8 to 1.4 mm were used as test specimens. The size of each test specimen was long sides: 150 mm and short sides: 50 mm. Table 1 shows the chemical composition of each of the steel sheets A to K. "-" in Table 1 indicates that the corresponding element is not added intentionally and is intended to include the case where the compound is incidentally contained (0%). "GA steel sheet" shown in Table 2 means the galvannealed steel sheet described above.
First, the obtained steel sheets were disposed so as to overlap each other as shown in Table 2 to form sheet sets. As for "First sheet" and "Second sheet" in "Stacking position of steel sheet" in Table 2, the steel sheets are counted from the lower side. Next, each of the sheet sets was used to perform resistance spot welding under welding conditions shown in Table 3 to form a nugget 3 having a required size between the sheets, and a resistance spot welded joint is thereby produced. In some sheet sets, three steel sheets were disposed so as to overlap each other. "-" in Table 3 indicates that the corresponding process was not performed.
In the Examples, as shown in Fig. 4, a servo motor pressurizing-type resistance welding device attached to a C gun and including a DC power source was used to perform resistance spot welding on a sheet set including a plurality of overlapping steel sheets (the lower steel sheet 1 and the upper steel sheet 2 in the example shown in Fig. 4).
The other welding conditions were as follows. The welding force during energization was constant and was 3.5 kN in the Examples. A welding electrode 4 on the lower side of the sheet set and a welding electrode 5 on the upper side were each a chromium-copper made DR type electrode having a tip end with a diameter of 6 mm and a radius of curvature of 40 mm. The lower welding electrode 4 and the upper welding electrode 5 were used to control the welding force, and the welding was performed using the DC power source. The nugget was formed such that its diameter (mm) was equal to or less than 5.5Vt (mm). Here, t is the sheet thickness. As described above, the "t" is the thickness of the thinnest steel sheet.
Each of the obtained resistance spot welded joints was used, and a cross tensile test was performed using a method described below to evaluate the CTS. The microstructure of the edge portion of the nugget, the hardness of the nugget, the hardness of the HAZ, the diameter of carbide particles in the edge portion of the nugget, and the average number density of the carbide particles were measured using methods described below.

[Evaluation of CTS]

The CTS was evaluated based on the cross tensile test. Each of the produced resistance spot welded joints was used to perform the cross tensile test according to a method specified in JIS Z 3137 to measure the CTS (cross tension strength). When the measured value was JIS grade A (3.4 kN) or higher, the symbol "o" was placed in the "CTS judgement" column in Table 4. When the measured value was lower than the JIS grade A, the symbol "×" was placed in the "CTS judgement" column in Table 4. In the Examples, the evaluation symbol "○" means good, and the evaluation symbol "×" means poor. The measurement results are shown in Table 4.

[Evaluation of hardness]

The hardness of the nugget and the hardness of the HAZ were measured as follows.
Each of the produced resistance spot welded joints was cut at a position passing through the center of the nugget formed into a circular shape to thereby obtain a test specimen. The test specimen was subjected to ultrasonic cleaning and then embedded in a resin to prepare a sample. A thicknesswise cross section of the sample was polished and etched with a picric acid solution to prepare a sample. The hardness of the HAZ was measured using a Vickers hardness meter by a method specified in JIS Z 2244. As for the measurement load conditions, an indenter of 300 gf was used to apply a load for 15 seconds.
Using the same method as described above, the "Hardness of softest nugget region," "Hardness of HAZ," and "Hardness inside nugget excluding softest nugget region" shown in Table 4 were measured.

Specifically, as shown in Fig. 5, the Vickers hardness was measured at positions arranged at 0.2 mm intervals on a straight line (the straight line Y) that was parallel to the faying surface 7 of the steel sheets and that was located 0.2 mm above the faying surface 7 in the thickness direction. The measurement region was a region extending from the center of the nugget to the outer edge of the HAZ.

When the tensile strength of the upper steel sheet differs from the tensile strength of the lower steel sheet, the Vickers hardness is measured on the higher-strength steel sheet side.

Specifically, when two steel sheets had the same tensile strength as in, for example, sheet sets a and b etc. shown in Table 2, the Vickers hardness of the upper steel sheet was measured as described above.

When two steel sheets had different tensile strengths as in, for example, sheet sets d and e, the Vickers hardness was measured on the steel sheet having the highest tensile strength. In these examples, the measurement target is the lower steel sheet. Therefore, the measurement was performed in the same manner as above at positions 0.2 mm below the faying surface 7 of the steel sheets in the thickness direction.

When the high strength steel sheet in the present invention and comparative steel were disposed so as to overlap each other as in, for example, sheet sets k and 1, the Vickers hardness was measured in the same manner as above on the lower steel sheet that was a high strength steel sheet.

As shown in Fig. 1, the intersections of the faying surface 7 and the boundary of the nugget are denoted as the first edge portion and the second edge portion. Two points located on the line segment X connecting the first edge portion and the second edge portion are denoted as the point a and the point b, respectively. A region inside the nugget in which the distance L (mm) between the first edge portion and the point a and the distance L (mm) between the second edge portion and the point b satisfy the above-described formula (1) is defined as the softest nugget region 31.

The lowest hardness value (the softest value) in the softest nugget region 31 within the measurement region is defined as the "hardness of the softest nugget region 31." The average hardness in the region from the boundary between the HAZ 6 and the nugget 3 to the outer edge of the HAZ 6 within the measurement region is defined as the "hardness of the HAZ 6." In the measurement region, the average hardness in a region from the center of the nugget 3 to the point a shown in Fig. 1 (an edge portion of the softest nugget region 31 on the nugget center side) was determined and used as the "hardness of the region in the nugget 3 excluding the softest nugget region 31." The hardnesses obtained are shown in Table 4.

In Table 4, "Hardness ratio" is the ratio of the hardness of the softest nugget region 31 to the hardness of the HAZ 6. In the "Hardness judgement" column in Table 4, the judgement result of whether the hardness ratio is 90% or more is shown. The symbol "o" means pass (90% or more), and the symbol "×" means fail (less than 90%).

[Diameter and average number density of carbide particles in softest nugget region]

The steel sheet microstructure of the softest nugget region 31 was observed as shown in Fig. 1. Specifically, the region 31 was cut from a resistance spot welded member obtained, and a thicknesswise cross section of the cut piece was polished, etched with 3% nital, and observed using a TEM (transmission electron microscope) at a magnification of 10000X. Then Image-Pro was used to compute the equivalent circle diameters of cementite particles with the lower limit set to 0.005 um to thereby determine the diameters of the cementite particles.

The average number density (particles / 5 $\mu$m$^2$) of cementite particles having a diameter of 100 nm or more was determined as follows. The cross section was observed using the TEM (transmission electron microscope) at a magnification of 10000X, and the number density per 5 $\mu$m$^2$ in the sheet cross section was determined at 5 positions. The average of the obtained values was used as the average number density of carbide particles having a diameter of 100 nm or more per 5 $\mu$m$^2$ in the sheet cross section. The obtained average number density is shown in Table 4. When the diameters of carbide particles are large, these particles can be precipitates other than carbide formed during the tempering. Therefore, the diameters of the carbide particles are set to 500 nm or less.

Fig. 6 shows the order of observation. As shown in Fig. 6, it is only necessary that the average number density (particles / 5 $\mu$m$^2$) of the carbide particles be satisfied in at least one position in the range with the distance L (i.e., within the softest nugget region 31). For example, as shown in Fig. 6, the softest nugget region 31 was finely divided into rectangular blocks, and observation was started from a position labeled "1." The observation was continued while the observation position was changed until the observation result met the average number density described above (i.e., the observation result was rated pass). In the first observation, the average number density was observed at a position spaced ($0.02 \times$ D) mm toward the center of the nugget from the point 1. If the observation result did not meet the average number density described above (i.e., the observation result was rated fail), a second observation was performed at a position labelled "2." In the second observation also, the observation was performed at a position spaced ($0.02 \times$ D) mm toward the center of the nugget from the point 2. This procedure was sequentially repeated until the observation result was rated "pass." In the "Number of observations" column in Table 4, the position number in which the observation result was rated pass (i.e., the number of observations) was shown.

The "D" above is the length (mm) of the line segment X shown in Fig. 1, and the value of the "D" is shown in Table 4.

When the microstructure of the nugget was observed in a region extending from the upper edge of the nugget to the lower edge in the thickness direction, the microstructure was substantially uniform in the observed region. Specifically, in the sheet sets a, b, d, e, k, and l, high strength steel sheets having the same tensile strength or different tensile strengths are disposed so as to overlap each other, or a high strength steel sheet and comparative steel are disposed so as to overlap each other. Even in these cases, the microstructure inside the nugget was a uniform microstructure. Therefore, by performing the observation using the method described using Fig. 6, the average number density of carbide particles in the softest nugget region can be determined.

[Evaluation of microstructure]

The microstructure of the edge portion of the nugget was observed as follows. One of the produced resistance spot welded joints was cut at a position passing through the center of the nugget formed into an elliptic shape to obtain a test specimen. The test specimen was subjected to ultrasonic cleaning and embedded in a resin to prepare a sample. A thicknesswise cross section of the sample was polished and etched with a nital solution to prepare a sample.

Specifically, as described above, the sample was prepared such that the softest nugget region 31 shown in Fig. 1 served as an observation surface. This sample was used to observe the microstructure of the softest nugget region using a scanning electron microscope (SEM) at a magnification of 1000X to 100000X. As for the microstructure of the steel sheets, the area fraction of each microstructure was measured using a point count method (according to ASTM E562-83 (1988)). The obtained area fractions of the microstructures are shown in Table 4. In Table 4, "TM" for a microstructure represents tempered martensite. "M" represents martensite, and "F" represents ferrite.

[Table 1]

| Steel sheet | Chemical composition (% by mass) | | | | | | | | | | | | | | | | | Remarks |
|---|---|---|---|---|---|---|---|---|---|---|---|---|---|---|---|---|---|---|
| | C | Si | Mn | P | Cu | Ni | Mo | Cr | Nb | V | Ti | B | Al | Ca | S | N | O | |
| A | 0.20 | 1.3 | 3.0 | 0.01 | - | - | - | - | - | - | - | - | - | - | 0.001 | 0.003 | - | Steel sheet A |
| B | 0.10 | 0.2 | 4.0 | 0.01 | - | - | - | 0.40 | - | - | - | - | - | - | 0.001 | 0.002 | - | Steel sheet B |
| C | 0.20 | 1.1 | 2.0 | 0.01 | - | - | - | - | - | 0.05 | - | 0.001 | - | 0.005 | 0.002 | 0.002 | 0.010 | Steel sheet C |
| D | 0.13 | 0.9 | 3.5 | 0.01 | 0.20 | 0.30 | - | - | - | - | - | - | 0.031 | - | 0.001 | 0.005 | - | Steel sheet D |
| E | 0.50 | 0.5 | 1.5 | 0.03 | - | - | - | - | - | - | 0.180 | - | - | - | 0.001 | 0.002 | - | Steel sheet E |
| F | 0.30 | 1.5 | 2.5 | 0.01 | - | - | - | - | - | - | 0.03 | 0.002 | - | - | 0.001 | 0.003 | - | Steel sheet F |
| G | 0.60 | 0.9 | 1.5 | 0.01 | - | - | 0.70 | - | - | - | - | - | - | - | 0.001 | 0.002 | - | Steel sheet G |
| H | 0.40 | 1.2 | 2.0 | 0.01 | - | - | - | - | 0.070 | - | - | - | - | - | 0.001 | 0.002 | - | Steel sheet H |
| I | 0.65 | 2.0 | 1.5 | 0.01 | - | - | - | - | - | - | - | - | - | - | 0.001 | 0.002 | - | Comparative steel I |
| J | 0.40 | 0.5 | 5.0 | 0.01 | - | - | - | - | - | - | - | - | - | - | 0.001 | 0.002 | - | Comparative steel J |
| K | 0.22 | 0.7 | 2.9 | 0.01 | 0.55 | 0.71 | - | 0.8 | - | 0.4 | - | - | 0.090 | 0.002 | 0.001 | 0.002 | - | Steel sheet K |

[Table 2]

| Sheet set | Stacking position of steel sheet | Steel sheet | Type steel of sheet | Tensile strength | Thickness of steel sheet |
|---|---|---|---|---|---|
| a | First sheet | Cold rolled steel sheet | Steel sheet A | 1180 MPa | 1.2 mm |
| a | Second sheet | Cold rolled steel sheet | Steel sheet A | 1180 MPa | 1.2 mm |
| b | First sheet | Cold rolled steel sheet | Steel sheet B | 1180 MPa | 1.2 mm |
| b | Second sheet | Cold rolled steel sheet | Steel sheet B | 1180 MPa | 1.2 mm |
| c | First sheet | Cold rolled steel sheet | Steel sheet A | 1180 MPa | 1.2 mm |
| c | Second sheet | Cold rolled steel sheet | Steel sheet B | 1180 MPa | 1.2 mm |
| d | First sheet | Cold rolled steel sheet | Steel sheet A | 1180 MPa | 1.2 mm |
| d | Second sheet | Cold rolled steel sheet | Steel sheet C | 980 MPa | 1.2 mm |
| e | First sheet | Cold rolled steel sheet | Steel sheet A | 1180 MPa | 1.2 mm |
| e | Second sheet | Cold rolled steel sheet | Steel sheet D | 780 MPa | 1.2 mm |
| f | First sheet | Cold rolled steel sheet | Steel sheet E | 1470 MPa | 1.2 mm |
| f | Second sheet | Cold rolled steel sheet | Steel sheet E | 1470 MPa | 1.2 mm |
| g | First sheet | Cold rolled steel sheet | Steel sheet F | 1470 MPa | 1.2 mm |
| g | Second sheet | Cold rolled steel sheet | Steel sheet F | 1470 MPa | 1.2 mm |
| h | First sheet | Cold rolled steel sheet | Steel sheet G | 1470 MPa | 1.2 mm |
| h | Second sheet | Cold rolled steel sheet | Steel sheet G | 1470 MPa | 1.2 mm |
| i | First sheet | Cold rolled steel sheet | Steel sheet H | 1470 MPa | 1.2 mm |
| i | Second sheet | Cold rolled steel sheet | Steel sheet H | 1470 MPa | 1.2 mm |
| j | First sheet | Cold rolled steel sheet | Comparative steel I | 1470 MPa | 1.2 mm |
| j | Second sheet | Cold rolled steel sheet | Comparative steel I | 1470 MPa | 1.2 mm |

(continued)

| Sheet set | Stacking position of steel sheet | Steel sheet | Type steel of sheet | Tensile strength | Thickness of steel sheet |
|---|---|---|---|---|---|
| k | First sheet | Cold rolled steel sheet | Steel sheet B | 1180 MPa | 1.2 mm |
| | Second sheet | Cold rolled steel sheet | Comparative steel I | 1470 MPa | 1.2 mm |
| l | First sheet | Cold rolled steel sheet | Steel sheet C | 1180 MPa | 1.2 mm |
| | Second sheet | Cold rolled steel sheet | Comparative steel J | 1470 MPa | 1.2 mm |
| m | First sheet | Cold rolled steel sheet | Steel sheet A | 1180 MPa | 0.8 mm |
| | Second sheet | Cold rolled steel sheet | Steel sheet A | 1180 MPa | 0.8 mm |
| | Third sheet | Cold rolled steel sheet | Steel sheet A | 1180 MPa | 0.8 mm |
| n | First sheet | GA steel sheet | Steel sheet A | 1180 MPa | 1.2 mm |
| | Second sheet | GA steel sheet | Steel sheet A | 1180 MPa | 1.2 mm |
| o | First sheet | GA steel sheet | Steel sheet A | 1180 MPa | 1.2 mm |
| | Second sheet | GA steel sheet | Steel sheet C | 1180 MPa | 1.2 mm |
| p | First sheet | GA steel sheet | Steel sheet A | 1180 MPa | 1.2 mm |
| | Second sheet | GA steel sheet | Steel sheet D | 1180 MPa | 1.2 mm |
| q | First sheet | GA steel sheet | Steel sheet F | 1470 MPa | 1.2 mm |
| | Second sheet | GA steel sheet | Steel sheet F | 1470 MPa | 1.2 mm |
| r | First sheet | GA steel sheet | Steel sheet D | 1470 MPa | 0.8 mm |
| | Second sheet | Cold rolled steel sheet | Steel sheet K | 1470 MPa | 1.4 mm |

[Table 3]

| | | Primary energization step | | Post-tempering heat treatment step | | | | | | Remarks |
| | | | | Cooling process | Heating process | | Holding process | | | |
| Welding number | Sheet set | Current value $I_m$ (kA) | Energization time $t_m$ (ms) | Cooling time $t_c$ (ms) | Current value $I_t$ (kA) | Energization time $t_t$ (ms) | Current value $I_{tm}$ (kA) | Energization time $t_{tm}$ (ms) | | |
|---|---|---|---|---|---|---|---|---|---|---|
| 1 | a | 6.5 | 280 | - | - | - | - | - | | Comparative Example |
| 2 | a | 6.5 | 280 | 1200 | 7.2 | 200 | 4.0 | 1600 | | Inventive Example |
| 3 | a | 6.5 | 280 | 900 | 7.5 | 120 | 5.5 | 500 | | Inventive Example |
| 4 | b | 6.5 | 280 | 1500 | 11.0 | 150 | 6.5 | 300 | | Inventive Example |
| 5 | b | 6.5 | 280 | 1400 | 7.0 | 180 | 8.0 | 900 | | Comparative Example |
| 6 | c | 6.5 | 250 | 1100 | 7.5 | 180 | 6.0 | 400 | | Inventive Example |
| 7 | c | 6.5 | 250 | 900 | 8.0 | 120 | 5.0 | 500 | | Inventive Example |
| 8 | c | 6.5 | 250 | 1500 | 8.0 | 120 | 4.5 | 1800 | | Inventive Example |
| 9 | d | 6.7 | 250 | 860 | 11.0 | 50 | 4.5 | 1600 | | Comparative Example |
| 10 | d | 6.7 | 280 | 900 | 8.8 | 120 | 3.0 | 1000 | | Inventive Example |
| 11 | d | 6.7 | 280 | 1000 | 7.5 | 180 | 1.0 | 500 | | Inventive Example |
| 11' | d | 4.1 | 380 | 1400 | 7.9 | 120 | 4.0 | 700 | | Inventive Example |
| 12 | e | 6.5 | 280 | 900 | 8.1 | 140 | 4.5 | 600 | | Inventive Example |

| Welding number | Sheet set | Primary energization step | | Post-tempering heat treatment step | | | | | Remarks |
| | | | | Cooling process | Heating process | | Holding process | | |
| | | Current value $I_m$ (kA) | Energization time $t_m$ (ms) | Cooling time $t_c$ (ms) | Current value $I_t$ (kA) | Energization time $t_t$ (ms) | Current value $I_{tm}$ (kA) | Energization time $t_{tm}$ (ms) | |
|---|---|---|---|---|---|---|---|---|---|
| 13 | e | 6.5 | 280 | 800 | 7.0 | 20 | 4.0 | 1500 | Comparative Example |
| 14 | f | 6.5 | 280 | 600 | 7.8 | 160 | 4.5 | 600 | Comparative Example |
| 15 | f | 6.7 | 300 | 1400 | 8.0 | 180 | 4.0 | 1500 | Inventive Example |
| 15' | f | 6.7 | 300 | 1400 | 8.0 | 180 | 9.0 | 1000 | Comparative Example |
| 16 | f | 6.5 | 280 | 1600 | 7.4 | 160 | 6.1 | 1100 | Inventive Example |
| 17 | g | 6.5 | 280 | 1000 | 7.6 | 120 | 5.5 | 1600 | Inventive Example |
| 18 | g | 6.5 | 280 | 800 | 7.4 | 180 | 4.6 | 900 | Inventive Example |
| 19 | g | 6.5 | 280 | 500 | 5.2 | 120 | 3.5 | 1600 | Comparative Example |
| 20 | g | 6.5 | 280 | 1600 | 7.7 | 140 | 5.0 | 1400 | Inventive Example |
| 21 | h | 6.5 | 280 | 1600 | 7.5 | 160 | 5.0 | 260 | Comparative Example |
| 22 | h | 6.5 | 280 | 1200 | 7.6 | 300 | 4.0 | 300 | Comparative Example |
| 23 | h | 8.0 | 280 | 1000 | 9.0 | 200 | 6.5 | 2000 | Inventive Example |

EP 4 353 393 A1

| | | Primary energization step | | Post-tempering heat treatment step | | | | | Remarks |
| | | | | Cooling process | Heating process | | Holding process | | |
| Welding number | Sheet set | Current value $I_m$ (kA) | Energization time $t_m$ (ms) | Cooling time $t_c$ (ms) | Current value $I_t$ (kA) | Energization time $t_t$ (ms) | Current value $I_{tm}$ (kA) | Energization time $t_{tm}$ (ms) | |
|---|---|---|---|---|---|---|---|---|---|
| 24 | i | 6.5 | 280 | 1600 | 8.0 | 140 | 4.5 | 1600 | Inventive Example |
| 25 | i | 6.5 | 280 | 2000 | 10.0 | 160 | 4.0 | 200 | Comparative Example |
| 26 | j | 6.5 | 280 | 1000 | 7.5 | 120 | 4.0 | 500 | Comparative Example |
| 27 | k | 6.5 | 280 | 1800 | 7.2 | 140 | 3.8 | 700 | Inventive Example |
| 28 | k | 6.5 | 280 | 1600 | 7.4 | 200 | 3.4 | 1500 | Inventive Example |
| 29 | k | 6.5 | 280 | 1600 | 13.5 | 140 | 4.5 | 1200 | Comparative Example |
| 30 | l | 6.5 | 280 | 1600 | 7.8 | 180 | 4.0 | 1000 | Inventive Example |
| 31 | l | 6.7 | 250 | 1800 | 7.0 | 120 | 4.2 | 1300 | Comparative Example |
| 32 | m | 6.5 | 280 | 900 | 7.5 | 160 | 5.0 | 900 | Inventive Example |
| 33 | m | 6.5 | 280 | 2000 | 8.5 | 150 | 4.5 | 600 | Inventive Example |
| 34 | d | 6.7 | 280 | 2000 | 8.5 | 150 | 4.5 | 1500 | Inventive Example |
| 35 | g | 6.5 | 280 | 1800 | 7.4 | 180 | 4.6 | 1200 | Inventive Example |

(continued)

| Welding number | Sheet set | Primary energization step | | Post-tempering heat treatment step | | | | | | Remarks |
| | | Current value $I_m$ (kA) | Energization time $t_m$ (ms) | Cooling process | Heating process | | Holding process | | | |
| | | | | Cooling time $t_c$ (ms) | Current value $I_t$ (kA) | Energization time $t_t$ (ms) | Current value $I_{tm}$ (kA) | Energization time $t_{tm}$ (ms) | | |
| 36 | r | 7.2 | 280 | 1600 | 8.8 | 180 | 4.6 | 1700 | | Inventive Example |
| 37 | n | 6.5 | 280 | 800 | 7.7 | 120 | 5.5 | 500 | | Inventive Example |
| 38 | o | 6.7 | 280 | 1200 | 7.5 | 180 | 4.0 | 500 | | Inventive Example |
| 39 | p | 6.5 | 280 | 1000 | 8.0 | 120 | 5.0 | 600 | | Inventive Example |
| 40 | q | 6.5 | 280 | 1600 | 8.3 | 180 | 4.6 | 700 | | Inventive Example |

[Table 4]

| Welding number | Sheet set | Number of observations | Length of line segment X D (mm) | Suitability of formula (1) | Hardness of weld | | | | | Microstructure of softest nugget region | | | | Evaluation results | | Remarks |
|---|---|---|---|---|---|---|---|---|---|---|---|---|---|---|---|---|
| | | | | | Hardness inside nugget excluding softest nugget region | Hardness of softest nugget region | Hardness of HAZ | Hardness ratio [*1] (%) | Hardness judgement | Average number density of carbide particles (particles / 5 $\mu$m$^2$) | Type of microstructure [*2] | Area fraction of TM (%) | Total area fraction of remaining microstructures (M, F) (%) | CTS (kN) | CTS judgement | |
| 1 | a | 30 | 5.5 | ○ | 511 | 514 | 522 | 98.467 | × | 0 | M | 0 | 100 | 2.1 | × | Comparative Example |
| 2 | a | 1 | 5.5 | ○ | 478 | 380 | 452 | 84071 | ○ | 52 | TM, M | 52 | 48 | 5.5 | ○ | Inventive Example |
| 3 | a | 1 | 5.5 | ○ | 508 | 341 | 406.4 | 83.907 | ○ | 78 | TM, M | 80 | 20 | 7.0 | ○ | Inventive Example |
| 4 | b | 1 | 5.5 | ○ | 422 | 300 | 337.6 | 88.863 | ○ | 13 | TM, M | 75 | 25 | 6.8 | ○ | Inventive Example |
| 5 | b | 30 | 5.5 | ○ | 434 | 412 | 444 | 92.793 | × | 1 | M | 0 | 100 | 2.4 | × | Comparative Example |
| 6 | c | 1 | 5.5 | ○ | 470 | 312 | 376 | 82.979 | ○ | 41 | TM, M | 95 | 5 | 8.5 | ○ | Inventive Example |
| 7 | c | 1 | 5.5 | ○ | 423 | 338 | 411 | 82.238 | ○ | 38 | TM, M | 90 | 10 | 7.7 | ○ | Inventive Example |
| 8 | c | 1 | 5.5 | ○ | 432 | 330 | 370 | 89.189 | ○ | 55 | TM, M | 92 | 8 | 8.0 | ○ | Inventive Example |
| 9 | d | 30 | 5.5 | ○ | 510 | 505 | 513 | 98.441 | × | 0 | M | 0 | 100 | 2.7 | × | Comparative Example |

EP 4 353 393 A1

| Welding number | Sheet set | Number of observations | Length of line segment X D (mm) | Suitability of formula (1) | Hardness of weld | | | | | Microstructure of softest nugget region | | | | Evaluation results | | Remarks |
|---|---|---|---|---|---|---|---|---|---|---|---|---|---|---|---|---|
| | | | | | Hardness inside nugget excluding softest nugget region | Hardness of softest nugget region | Hardness of HAZ | Hardness ratio [*1] (%) | Hardness judgement | Average number density of carbide particles (particles / 5 $\mu$m$^2$) | Type of microstructure [*2] | Area fraction of TM (%) | Total area fraction of remaining microstructures (M, F) (%) | CTS (kN) | CTS judgement | |
| 10 | d | 1 | 5.7 | ○ | 451 | 360 | 423 | 85.106 | ○ | 53 | TM, M, F | 60 | 40 | 6.5 | ○ | Inventive Example |
| 11 | d | 1 | 5.7 | ○ | 508 | 373 | 422 | 88.389 | ○ | 78 | TM, M | 75 | 25 | 8.5 | ○ | Inventive Example |
| 11' | d | 1 | 4.1 | ○ | 511 | 365 | 425 | 85.882 | ○ | 82 | TM, M | 77 | 23 | 5.7 | ○ | Inventive Example |
| 12 | e | 1 | 5.7 | ○ | 492 | 302 | 393.6 | 76.728 | ○ | 72 | TM, M | 80 | 20 | 8.5 | ○ | Inventive Example |
| 13 | e | 30 | 5.5 | ○ | 478 | 453 | 485 | 93.402 | × | 0 | M | 0 | 100 | 1.2 | × | Comparative Example |
| 14 | f | 30 | 5.5 | ○ | 801 | 788 | 806 | 97.767 | × | 0 | M | 0 | 100 | 1.1 | × | Comparative Example |
| 15 | f | 1 | 5.5 | ○ | 724 | 579 | 716 | 80.866 | ○ | 63 | TM, M | 51 | 49 | 4.1 | ○ | Inventive Example |
| 15' | f | 30 | 5.5 | ○ | 795 | 778 | 787 | 98.856 | × | 0 | M | 0 | 100 | 19 | × | Comparative Example |
| 16 | f | 21 | 5.6 | ○ | 794 | 568 | 635.2 | 89.421 | ○ | 84 | TM, M | 70 | 30 | 7.2 | ○ | Inventive Example |

EP 4 353 393 A1

| Welding number | Sheet set | Number of observations | Length of line segment X D (mm) | Suitability of formula (1) | Hardness of weld | | | | | Microstructure of softest nugget region | | | | Evaluation results | | Remarks |
|---|---|---|---|---|---|---|---|---|---|---|---|---|---|---|---|---|
| | | | | | Hardness inside nugget excluding softest nugget region | Hardness of softest nugget region | Hardness of HAZ | Hardness ratio [*1] (%) | Hardness judgement | Average number density of carbide particles (particles / 5 $\mu m^2$) | Type of microstructure [*2] | Area fraction of TM (%) | Total area fraction of remaining microstructures (M, F) (%) | CTS (kN) | CTS judgement | |
| 17 | g | 1 | 5.5 | ○ | 592 | 351 | 557 | 63.016 | ○ | 142 | TM, M | 75 | 25 | 7.5 | ○ | Inventive Example |
| 18 | g | 16 | 5.5 | ○ | 547 | 437 | 531 | 82.298 | ○ | 70 | TM, M | 59 | 41 | 4.2 | ○ | Inventive Example |
| 19 | g | 30 | 5.5 | ○ | 600 | 603 | 597 | 101.01 | × | 0 | M | 0 | 100 | 1.5 | × | Comparative Example |
| 20 | g | 1 | 5.5 | ○ | 581 | 421 | 475 | 88.632 | ○ | 84 | TM, M | 57 | 43 | 4.4 | ○ | Inventive Example |
| 21 | h | 30 | 5.5 | ○ | 810 | 819 | 808 | 101.36 | × | 0 | M | 0 | 100 | 0.7 | × | Comparative Example |
| 22 | h | 30 | 5.5 | ○ | 800 | 830 | 795 | 104.4 | × | 0 | M | 0 | 100 | 0.8 | × | Comparative Example |
| 23 | h | 1 | 6.0 | ○ | 813 | 580 | 650.4 | 89.176 | ○ | 56 | TM, M | 51 | 49 | 4.1 | ○ | Inventive Example |
| 24 | i | 1 | 5.5 | ○ | 695 | 495 | 556 | 89.029 | ○ | 123 | TM, M | 70 | 30 | 7.5 | ○ | Inventive Example |
| 25 | i | 30 | 5.5 | ○ | 701 | 705 | 711 | 99.156 | × | 0 | M | 0 | 100 | 1.3 | × | Comparative Example |

| Welding number | Sheet set | Number of observations | Length of line segment XD (mm) | Suitability of formula (1) | Hardness of weld | | | | | Microstructure of softest nugget region | | | | Evaluation results | | Remarks |
| | | | | | Hardness inside nugget region excluding softest nugget region | Hardness of softest nugget region | Hardness of HAZ | Hardness ratio [*1] (%) | Hardness judgement | Average number density of carbide particles (particles / 5 μm²) | Type of microstructure [*2] | Area fraction of TM (%) | Total area fraction of remaining microstructures (M, F) (%) | CTS (kN) | CTS judgement | |
|---|---|---|---|---|---|---|---|---|---|---|---|---|---|---|---|---|
| 26 | j | 30 | 5.5 | ○ | 835 | 830 | 823 | 100.85 | × | 0 | M | 0 | 100 | 0.9 | × | Comparative Example |
| 27 | k | 1 | 5.5 | ○ | 651 | 533 | 599 | 88.982 | ○ | 82 | TM, M | 57 | 43 | 4.5 | ○ | Inventive Example |
| 28 | k | 1 | 5.5 | ○ | 669 | 439 | 535.2 | 82.025 | ○ | 110 | TM, M | 62 | 38 | 6.9 | ○ | Inventive Example |
| 29 | k | 30 | 5.5 | ○ | 651 | 630 | 642 | 98.131 | × | 0 | M | 0 | 100 | 1.3 | × | Comparative Example |
| 30 | l | 1 | 5.5 | ○ | 592 | 372 | 473.6 | 78.547 | ○ | 71 | TM, M | 57 | 43 | 5.7 | ○ | Inventive Example |
| 31 | l | 30 | 5.8 | ○ | 600 | 583 | 587 | 99.319 | × | 1 | M | 0 | 100 | 1.6 | × | Comparative Example |
| 32 | m | 1 | 5.5 | ○ | 506 | 361 | 404.8 | 89.18 | ○ | 51 | TM, M | 55 | 45 | 6.2 | ○ | Inventive Example |
| 33 | m | 1 | 5.5 | ○ | 512 | 361 | 409.6 | 88.135 | ○ | 62 | TM, M | 60 | 40 | 6.8 | ○ | Inventive Example |
| 34 | d | 1 | 5.7 | ○ | 508 | 333 | 425 | 78.353 | ○ | 375 | TM | 100 | 0 | 9.1 | ○ | *Inventive Example* |

| Weld-ing number | Sheet set | Number of observa-tions | Length of line seg-ment X D (mm) | Suitabili-ty of for-mula (1) | Hardness of weld | | | | | Microstructure of softest nugget region | | | | Evaluation re-sults | | Remarks |
|---|---|---|---|---|---|---|---|---|---|---|---|---|---|---|---|---|
| | | | | | Hard-ness in-side nug-get exclud-ing soft-est nug-get region | Hard-ness of softest nugget region | Hard-ness of HAZ | Hard-ness ra-tio [*1] (%) | Hardness judge-ment | Average number density of car-bide par-ticles (parti-cles / 5 μm$^2$) | Type of microstruc-ture [*2] | Area frac-tion of TM (%) | Total area fraction of re-maining microstruc-tures (M, F) (%) | CTS (kN) | CTS judge-ment | |
| 35 | g | 1 | 5.5 | ○ | 590 | 400 | 555 | 72.072 | ○ | 121 | TM, M, F | 57 | 43 | 59 | ○ | Inventive Example |
| 36 | r | 1 | 5.3 | ○ | 532 | 449 | 530 | 84717 | ○ | 65 | TM, M, F | 68 | 32 | 5.7 | ○ | Inventive Example |
| 37 | n | 1 | 5.8 | ○ | 500 | 302 | 352 | 85.795 | ○ | 82 | TM, M | 78 | 22 | 8.1 | ○ | Inventive Example |
| 38 | o | 1 | 5.5 | ○ | 508 | 341 | 406.4 | 83.907 | ○ | 80 | TM, M | 80 | 20 | 7.1 | ○ | Inventive Example |
| 39 | p | 1 | 5.7 | ○ | 508 | 373 | 422 | 88.389 | ○ | 78 | TM, M | 77 | 23 | 8.5 | ○ | Inventive Example |
| 40 | q | 1 | 5.7 | ○ | 492 | 302 | 393.6 | 76.728 | ○ | 81 | TM, M | 82 | 18 | 8.6 | ○ | Inventive Example |

*1. Hardness ratio (%) = (hardness of softest nugget region / hardness of HAZ) x 100
*2. M: Martensite, TM: Tempered martensite, F: Ferrite

As can be seen from Tables 3 and 4, in each of the Inventive Examples, the resistance spot welded joint formed by resistance-spot-welding a plurality of steel sheets including at least one high strength steel sheet was a good welded joint having excellent tensile shear strength. However, in the Comparative Examples, no good welded joint was obtained.

Reference Signs List

| | |
|---|---|
| 1, 2, 10 | steel sheet |
| 3 | nugget |
| 31 | softest nugget region |
| 4, 5 | welding electrode |
| 6 | heat-affected zone |
| 7 | steel sheet faying surface |
| 8 | first edge portion |
| 9 | second edge portion |
| 11 | resistance spot welded joint |

**Claims**

1. A resistance spot welded joint having a resistance spot weld formed by resistance-spot-welding two or more steel sheets including at least one high strength steel sheet,

    wherein the high strength steel sheet has a chemical composition containing, in mass %,
    C: 0.05 to 0.6%,
    Si :0.1 to 2.0%,
    Mn: 1.5 to 4.0%, and
    P: 0.10% or less,
    with the balance being Fe and incidental impurities,
    wherein the length of a line segment X connecting a first edge portion and a second edge portion is denoted as D (mm) where the first edge portion and the second edge portion are two points at which a boundary of a nugget intersects a faying surface of two of the two or more steel sheets, wherein positions on the line segment X that are spaced toward a center of the nugget from the first edge portion and the second edge portion are denoted as a point a and a point b, respectively,
    wherein a region inside the nugget in which a distance L (mm) between the first edge portion and the point a and a distance L (mm) between the second edge portion and the point b satisfy a relation with the length D (mm) of the line segment X that is represented by formula (1) is defined as a softest nugget region,
    wherein the hardness of the softest nugget region on at least the faying surface is equal to or less than 90% of the hardness of a heat-affected zone formed so as to surround the nugget,
    wherein the softest nugget region has a microstructure including tempered martensite, and
    wherein the average number density of carbide particles having a diameter of 100 nm or more in the softest nugget region is 10 or more per 5 $\mu m^2$ in a cross section of the steel sheets,

$$0 < L \leq 0.10 \times D \qquad (1)$$

    provided that, when a gap is present between the two of the two or more steel sheets at the faying surface, the first edge portion and the second edge portion are two points at which the boundary of the nugget intersects a straight line Y that is located midway in the gap and that is parallel to the faying surface.

2. The resistance spot welded joint according to claim 1, wherein the chemical composition of the high strength steel sheet further contains, in mass %, one or two or more selected from

    Cu: 0.8% or less,
    Ni: 1.0% or less,
    Mo: 1.0% or less,
    Cr: 1.0% or less,

Nb: 0.080% or less,
V: 0.50% or less,
Ti: 0.20% or less,
B: 0.005% or less,
Al: 2.0% or less, and
Ca: 0.005% or less.

3. The resistance spot welded joint according to claim 1 or 2, wherein the high strength steel sheet includes a coated layer on a surface thereof.

4. A resistance spot welding method for the resistance spot welded joint according to any one of claims 1 to 3, the resistance spot weld being formed by holding, between a pair of welding electrodes, a sheet set including the two or more steel sheets overlapping each other and including the at least one high strength steel sheet and then performing energization under application of pressure,
   wherein the energization includes:

   a primary energization step of energizing the sheet set at a current value of $I_m$ (kA) to form the nugget; and
   a post-tempering heat treatment step including a cooling process of providing a cooling time $t_c$ (ms) shown in formula (2),
   a heating process of energizing the resistance spot weld at a current value $I_t$ (kA) shown in (3) for an energization time tt (ms) shown in formula (4), and
   a holding process of energizing the resistance spot weld at a current value $I_{tm}$ (kA) shown in formula (5) for an energization time $t_{tm}$ (ms) shown in formula (6),

$$800 \leq t_c, \quad (2)$$

$$1.1 \times I_m \leq I_t \leq 2.0 \times I_m, \quad (3)$$

$$100 < t_t \leq 200, \quad (4)$$

$$I_{tm} < I_t, \quad (5)$$

$$300 \leq t_{tm} < 3500. \quad (6)$$

# FIG. 1

# FIG. 2

# FIG. 3

# FIG. 4

# FIG. 5

MEASUREMENT REGION

3   6   8

11

2

STRAIGHT LINE Y

X

7

31

a

L

1

# FIG. 6

31

| 15 | 14 | 13 | 12 | 11 |
| 10 | 9 | 8 | 7 | 6 |
| 5 | 4 | 3 | 2 | 1 |
| 20 | 19 | 18 | 17 | 16 |
| 25 | 24 | 23 | 22 | 21 |
| 30 | 29 | 28 | 27 | 26 |

# FIG. 7

## INTERNATIONAL SEARCH REPORT

| International application No. |
| --- |
| **PCT/JP2022/028412** |

### A. CLASSIFICATION OF SUBJECT MATTER

*B23K 11/11*(2006.01)i; *B23K 11/16*(2006.01)i; *B23K 11/24*(2006.01)i; *C22C 38/00*(2006.01)i; *C22C 38/04*(2006.01)i;
*C22C 38/58*(2006.01)i
FI:  B23K11/11 540; B23K11/16 311; B23K11/24 315; C22C38/00 301U; C22C38/00 301T; C22C38/04; C22C38/58

According to International Patent Classification (IPC) or to both national classification and IPC

### B. FIELDS SEARCHED

Minimum documentation searched (classification system followed by classification symbols)

B23K11/11; B23K11/16; B23K11/24; C22C38/00; C22C38/04; C22C38/58

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2020/240961 A1 (JFE STEEL CORP.) 03 December 2020 (2020-12-03) paragraphs [0068]-[0123], fig. 1 | 1-3 |
| A | | 4 |
| A | WO 2018/038045 A1 (JFE STEEL CORP.) 01 March 2018 (2018-03-01) entire text, all drawings | 1-4 |
| A | JP 2013-128945 A (JFE STEEL CORP.) 04 July 2013 (2013-07-04) entire text, all drawings | 1-4 |
| A | JP 2020-69525 A (NIPPON STEEL CORP.) 07 May 2020 (2020-05-07) entire text, all drawings | 1-4 |
| A | JP 2020-82104 A (KOBE STEEL, LTD.) 04 June 2020 (2020-06-04) entire text, all drawings | 1–4 |

☐ Further documents are listed in the continuation of Box C.  ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **04 October 2022** | **11 October 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

| International application No. |
| --- |
| **PCT/JP2022/028412** |

| Patent document cited in search report | | | Publication date (day/month/year) | Patent family member(s) | | | Publication date (day/month/year) |
| --- | --- | --- | --- | --- | --- | --- | --- |
| WO | 2020/240961 | A1 | 03 December 2020 | EP 3978178 A1 paragraphs [0077]-[0138], fig. 1 | | | |
| | | | | CN 113891773 | A | | |
| WO | 2018/038045 | A1 | 01 March 2018 | US 2019/0201999 entire text, all drawings | A1 | | |
| | | | | CN 109563588 | A | | |
| JP | 2013-128945 | A | 04 July 2013 | (Family: none) | | | |
| JP | 2020-69525 | A | 07 May 2020 | (Family: none) | | | |
| JP | 2020-82104 | A | 04 June 2020 | US 2022/0016725 entire text, all drawings | A1 | | |
| | | | | CN 113039034 | A | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5043236 B
- JP 5182855 B

- JP 5895430 B